# EUROPEAN PATENT SPECIFICATION

(11) **EP 0 500 159 B1**
(45) Date of publication and mention of the grant of the patent: **05.08.1998**
(21) Application number: 92200350.4
(22) Date of filing: 10.02.1992
(51) Int. Cl.: G11B 20/18

(54) **Transmission system, and receiver to be used in the transmission system**
Übertragungssystem und Empfänger zur Verwendung im Übertragungssystem
Système de transmission et récepteur destiné à être utilisé dans ce système de transmission

(30) Priority: 19.02.1991 NL 9100285
(43) Date of publication of application: 26.08.1992
(73) Proprietor: Philips Electronics N.V., 5621 BA Eindhoven (NL)
(72) Inventor: Lokhoff, Gerardus Cornelis Petrus, NL-5656 AA Eindhoven (NL)
(74) Representative: van der Kruk, Willem Leonardus

(56) References cited:
- EP-A- 93 969
- EP-A- 163 736
- EP-A- 234 354
- EP-A- 264 986
- US-A- 3 995 116
- US-A- 4 593 392
- PATENT ABSTRACTS OF JAPAN vol. 14, no. 445 (P-1110)25 September 1990 & JP-A-02 176 800

## Description

The invention relates to a digital transmission system comprising a transmitter and a receiver, for transmitting through a transmission medium, and receiving, a wide-band digital signal, for example a digital audio signal, sampled with a specific sample frequency Fₛ, wherein the transmitter comprises an input terminal for receiving the wide-band digital signal, this input terminal being coupled to an input of a first coding means which comprises signal splitting means for generating a plurality of M sub-band signals in response to the wide-band digital signal with sample frequency reduction, for which purpose the splitting means split up the wide-band digital signal into successive sub-bands having band numbers m which augment with frequency, where for m the following holds: 1 ≤ m ≤ M, which coding means further includes quantization means for quantizing samples included in blocks of the respective sub-band signals, a quantized sub-band signal being formed by consecutive signal blocks, each signal block contains q samples, and bit allocation means for generating bit allocation information denoting by how many bits the q samples in a signal block are represented, which transmitter further includes scale factor information determining means for determining information relating to a scale factor which belongs to each signal block in the sub-band signal, means for accommodating the quantized sub-band signals, the scale factor information and the bit allocation information in a frame of a second digital signal formed by successive frames, second coding means for converting the second digital signal into a third digital signal so that an error correction of the third digital signal in the receiver is possible, and means for applying the third digital signal to the transmission medium, the receiver comprising:
a receiving means for receiving the third digital signal from the transmission medium,
an error correction means for converting the third digital signal into the second digital signal,
a deriving means for deriving the quantized sub-band signals, the bit allocation information and the scale factor information from the frames in the second digital signal,
a control signal generating means for generating a first control signal if an error in the third digital signal cannot be corrected when the conversion from the third digital signal to the second digital signal is made in the error correcting means,
an error masking means for processing at least the sub-band signals in response to the first control signal, and
a synthesis filter means for constructing a replica of the wide-band digital signal in response to the respective quantized sub-band signals, which synthesis filter means combines the sub-bands to the signal band of the wide-band digital signal with a sample frequency increase, and the invention relates to a receiver to be used in the transmission system.

A transmission system of the type mentioned in the opening paragraph is known from European Patent Application No. 0 402 973 and document (2) in the citation index of the relevant documents at the end of this application. In t.he prior-art receivers an error masking is used in the form of an interpolation of the received information, if the received information contains errors which can no longer be corrected. Separate interpolation circuits are necessary to enable application of such an interpolation.

It is an object of the invention to provide a transmission system and a receiver in this transmission system in which error masking can be realised in a simple manner.

For this purpose, the transmission system according to the invention is characterized in that the error masking means is arranged for allocating the zero amplitude to a sample for which a first control signal is generated by the control signal generating means.

The invention is based on the recognition that if there is an error sample in the prior-art interpolation circuits, a mean value is determined of at least the directly preceding sample and the directly successive sample, and that the mean value obtained takes the place of the error sample. This requires additional storage capacity and an additional averaging operation. Now, according to the invention, by assigning a zero amplitude to an error sample, there is no need for additional storage capacity and another averaging operation. Since the samples are applied to the synthesis filter means after the error masking, an averaging of the successive samples is already effected in this synthesis filter means. This implies that an interpolator in which this additional averaging is effected can be omitted.

The receiver according to the invention may further be characterized in that the error masking means is arranged for replacing the erroneous scale factor with an extrapolated value from scale factors belonging to one or more preceding signal blocks in the sub-band signal when the second control signal occurs.

The error masking means is preferably arranged for making this scale factor equal to the scale factor for the signal block preceding the signal block in the sub-band signal when the second control signal occurs.

In the prior-art interpolation circuit this erroneous scale factor is replaced with the mean value of the corresponding scale factors of the directly preceding and directly successive frame if one of the scale factors turns out to be faulty. This requires additional storage capacity for storing the scale factors of the directly preceding frame and directly successive frame. Furthermore, also in this case an additional averaging operation is necessary. If the erroneous scale factor is replaced with the preceding scale factor this implies that only additional storage capacity is necessary for storing the scale factors of the preceding frame and that no further averaging is necessary.

The receiver may further be characterized in that the error masking means is arranged for reiterating the information stored in the preceding frame if the control signal generating means has generated the third control signal for a frame and has not generated a third error signal for the frame preceding that frame.

If there is an error in the allocation information, the receiver will no longer be capable of deriving different sorts of information from the frames, so that in that case the information of the preceding frame is repeated. If a third control signal appears to be generated also for a successive frame, a zero amplitude is assigned to the samples in that frame. The synthesis filter means also performs an averaging operation, so that the output signal of the filter means may be zeroed not in an abrupt but in a slow manner.

The receiver may further be characterized in that the error masking means is arranged for assigning the zero amplitude to all the samples in the signal blocks in the second frame if the control signal generating means has generated a fourth control signal for a first and a directly successive second frame.

If the frame synchronization (sync) signal appears to be erroneous, whereas the sync signal of the preceding frame was correct, the fourth control signal will be generated because at that moment it is assumed that it is a matter of a unique error in the sync signal. If also the successive frame turns out to contain an erroneous sync signal, it is assumed that the synchronization in the receiver is lost. During the period of time in which attempts are made to lock on to the sync signals, the samples of the next frame and any frames after that are set to zero. The synthesis filter means again provides a slow zeroing of the output signal.

The invention will now be further explained in the following descriptions of the Figures with reference to a number of embodiments, in which:
Fig. 1 shows the transmitter in the transmission system;
Fig. 2 shows the second digital signal generated by the transmitter;
Fig. 3 shows an embodiment of the receiver according to the invention; and
Fig. 4 shows an embodiment of the error masking means.

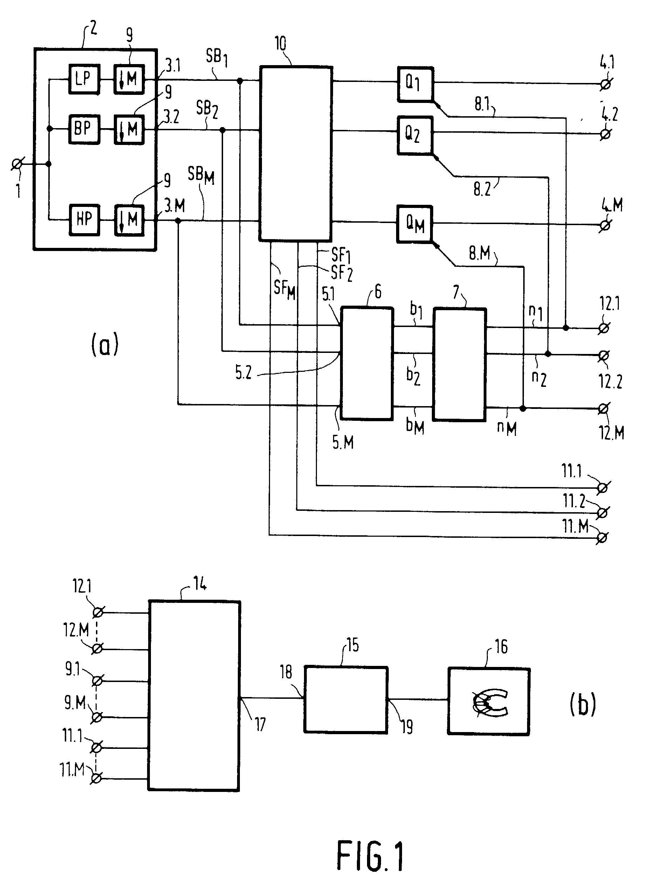

Fig. 1 shows in (a) the coding means of the transmitter. An input terminal 1 is supplied with a wide-band digital signal. In this context one may think of an audio signal having a bandwidth of about 20 kHz. The audio signal may be a stereo audio signal. In that case only one of the two signal portions (the left or right signal portion) of the stereo audio signal will be further discussed. The other signal portion will then be subject to the same process.

Input 1 is supplied with, for example, 16-bit samples of, for example, the left signal portion of the audio signal having a 44 kHz sample frequency. The audio signal is applied to a sub-band coder 2 comprising an analysis filter means. The sub-band coder 2 distributes the audio signal over M sub-bands by means of M filters *i.e.* a low-pass filter LP, M-2 bandpass filters BP and a high-pass filter HP. M is equal to, for example, 32. The sample frequency of the M sub-band signals is reduced in the blocks referenced 9. In such a block the sample frequency is reduced by a factor of M. The signals thus obtained are presented at the outputs 3.1, 3.2, ... 3.M. At the output 3.1 the signal is presented in the lowest sub-band SB₁. At the output 3.2 the signal is presented in the lowest but one sub-band SB₂. At the output 3.M the signal is presented in the highest sub-band SBₘ. The signals at the outputs 3.1 to 3.M have the form of successive samples expressed in 16-bit numbers or more, for example, 24-bit numbers. In the present exemplary embodiment the sub-bands SB₁ to SB_{M} are all equally wide.

However, this is not necessary. In the prior-art publication (5), Krasner, proposes a subdivision into a plurality of sub-bands whose bandwidths approximately correspond to the bandwidths of the critical bands of the human auditory system in the respective frequency areas.

The operation of the sub-band coder 2 will not be explained any further because the operation of the sub-band coding means has already been extensively discussed. For this purpose, the reader be referred to the prior-art documents (1), (5) and (7) which are assumed to be included in this application where necessary.

The sub-band signals are combined in consecutive signal blocks of q successive samples, *cf.* Fig. 1a, and applied to an associated quantizer Q₁ to Q_{M}. In a quantizer Qₘ the samples are quantized to quantized samples having a number of bits nₘ smaller than 16.

Fig. 1 shows how the left sub-band signals in signal blocks of q successive samples are applied to an associated quantizer Qₘ. In like manner the right sub-band signals in signal blocks of q successive samples are applied to an associated quantizer (not shown). During the quantization process the signal blocks (groups) of q successive samples of the sub-band signal portions are each time quantized to a smaller number of bits. For example, q is equal to 12. In addition, the q samples are first normalized in a signal block. This normalization is effected in the block denoted 10 by dividing the amplitudes of the q samples by the amplitude of the sample having the largest absolute value in the signal block. The amplitude of the sample having the largest amplitude in the signal block of the sub-band SBₘ produces a scale factor SFₘ, see document (2). Subsequently, the amplitudes of the normalized samples which are now situated in an amplitude range from -1 to +1, are quantized.

In the prior-art document (2) this quantization is extensively discussed, *cf.* Figs. 24, 25 and 26 and the relevant description in that document.

The quantized samples in the sub-bands SB₁ to SB_{M} are then presented at the respective outputs 4.1 to 4.M.

The outputs 3.1 to 3.M are furthermore coupled to the respective inputs 5.1 to 5.M of bit need determining means 6. The bit need determining means 6 determines for time-equivalent q-sample signal blocks of the left and right sub-band signal portions in the sub-bands SB₁ to SB_{M} the bit need bₘ. The bit need bₘ is a number which bears a proportion to the number of bits with which the q samples in a q-sample signal block in a sub-band signal portion should be quantized.

The bit needs b₁ to b_{M} derived by the bit need determining means 6, are applied to bit allocation means 7. The bit allocation means 7 determines the actual number of bits n₁ to n_{M} with which the q samples of the corresponding signal blocks in the sub-band signals SB₁ to SB_{M} are to be quantized on the basis of the bit needs b₁ to b_{M}. Control signals corresponding to the numbers n₁ to n_{M} are applied to the respective quantizers Q₁ to Q_{M} over the lines 8.1 to 8.M, so that the quantizers are capable of quantizing the samples with the correct number of bits.

Documents (9a) and (9b) of the citation index extensively discuss the operation of the bit need determining means 6 and the bit allocation means 7.

The quantized samples in the signal blocks of the sub-band signals are thereafter applied to inputs 4.1 to 4.M of a signal combining unit 14. In like manner the bit allocation information formed from the numbers n₁ to n_{M}, after a conversion as required, is applied to the inputs 9.1 to 9.M of the combining unit 14. Also the scale factor information formed from the scale factors SF₁ to SF_{M}, after a conversion as required, is applied to the inputs 11.1 to 11.M of the combining unit 14.

Fig. 1b shows a second section of the transmitter, which section further includes a second encoder 15 in addition to the combining unit 14, as well as a means 16 for applying the signal presented at its input to a transmission medium. In this case this transmission medium is a magnetic record carrier.

In addition to the samples, the bit allocation information and the scale factor information for the left signal portions in the sub-bands, also the samples, the bit allocation information and the scale factor information for the right signal portions in the sub-bands are applied to the combining unit 14. The unit 14 combines the signals and accommodates them in successive frames of a second digital signal presented at its output 17.

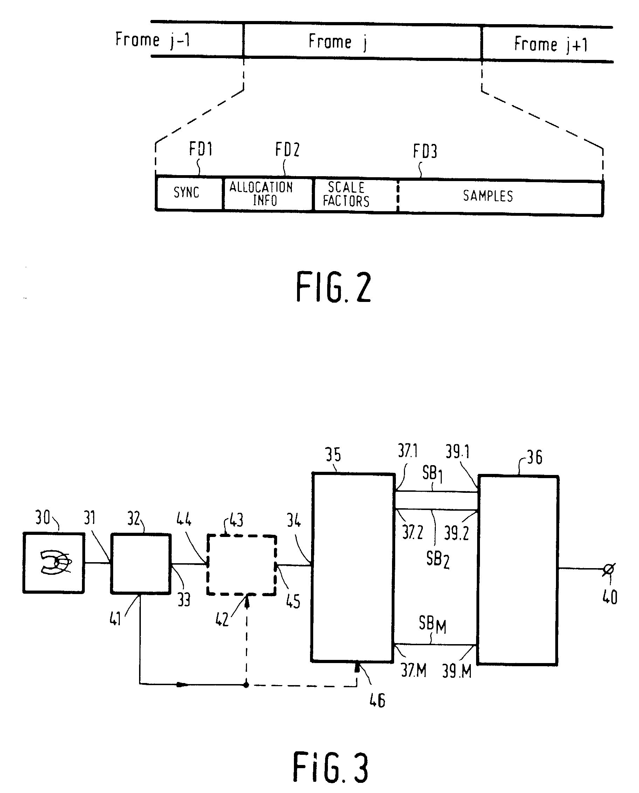

Fig. 2 shows the format of this second digital signal. This format is extensively discussed in document (2) of the citation index which document is assumed to be included in the present application where deemed necessary. Fig. 2 shows the second digital signal comprising the successive frames j-1, j, j+1 and shows how a frame may be constituted. The frame comprises a first frame portion FD1 in which sync information may be contained, a second frame portion FD2 in which the allocation information may be contained and a third frame portion FD3. This third frame portion first contains the scale factor information and then the samples of the quantized signals in the sub-bands. For a further description reference be made to document (2). The second digital signal is applied to the input 18 of the second encoder 15. In this encoder another encoding is performed of the second digital signal so that at the receiver end an error correction of the received information is possible. For this purpose, for example, a Reed solomon encoding and possibly an interleaving is used for the second digital signal. Furthermore, the signal is encoded in such a way that the information to be transmitted is suitable for transmission through the transmission medium. Therefore, for example, an 8-to-10 encoder can be used for the 8-bit words constituting the signal. Such an 8-to-10 conversion is described, for example, in European Patent Application 0 150 082 (PHN 11.117) in the Applicants' name. During this conversion the 8-bit information words are converted to 10-bit codewords.

The third digital signal thus obtained is presented at the output 19. This output 19 is coupled to input 20 of the means 16 which has the form of a recording means 16 for recording the third digital signal on a magnetic record carrier.

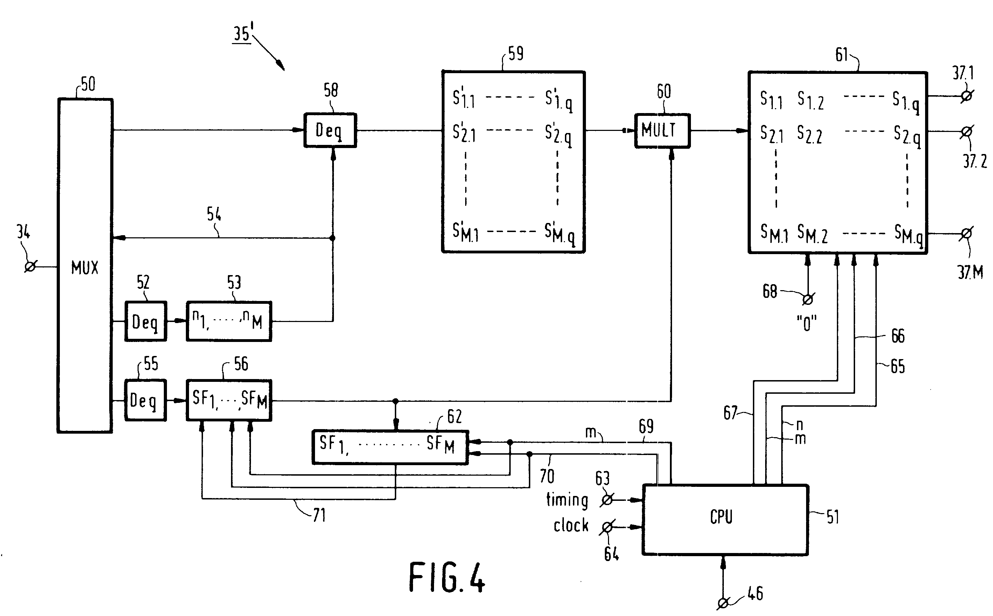

Fig. 3 shows in a diagram an embodiment of the receiver according to the invention. The receiver comprises a means 30 for receiving the third digital signal from the transmission medium. In this case the means 30 has the form of read means for reading information from a magnetic record carrier. The read-out third digital signal is applied to an input 31 of error correction means 32. In the means 32 first a 10-to-8 conversion is performed. Then an error correction operation is carried out and a possible de-interleaving of the information that has been read out. The thus decoded signal again corresponds to the second digital signal as is represented in Fig. 2, and is presented at an output 33. The second digital signal is applied to an input 34 of a means 35 which derives from the frames shown in Fig. 2 the allocation information, the scale factor information and the samples for each signal block in each sub-band. After dequantization and a multiplication by the scale factors the sub-band signals SB₁ to SB_{M} then appear at the outputs 37.1 to 37.M. These sub-band signals are applied to inputs 39.1 to 39.M of synthesis filter means 36 which restores the original digital signal from the sub-band signals. The operation of the synthesis filter means 36 is extensively discussed in document (7) of the citation index. The original digital signal is applied by the means 36 to an output 40 of the receiver. For example, the left signal portion of the original digital signal is concerned here. Needless to observe that the means 35 has still M outputs at which the sub-band signals of the right signal portion are available. Synthesis filter means (not shown) such as the filter means 36 is available for reconstructing the original right signal portion from these sub-band signals.

Any errors occurring in the incoming information are detected and corrected as required in the error correction unit 32. If an error turns out not to be corrigible, unit 32 will generate an error flag at an output 41. This error flag is applied to a control signal input 42 of an error masking system. Such an error masking system may be arranged between the correction unit 32 and the means 35 as is shown in a diagram in Fig. 3 by means of block 43 represented in dashed lines. Error masking in response to error flags of the correction unit 32 is then performed on the second digital signal. The moment an error flag of the unit 32 occurs indicates to the masking system which information word in the serial data stream of the second digital signal of Fig. 2 is erroneous. The error masking system 43 operates as follows.

Let us assume that an error flag is generated which denotes that a sample in the third frame portion FD₃ is erroneous. In that case the masking system 43 assigns to the associated sample an information word having a zero amplitude. One of the signal blocks of a sub-band signal as it is finally applied to the synthesis filter means 36 by the means 35 thus contains a zero amplitude sample. As a result of the filter characteristic in the synthesis filter means 36 there will now automatically be an interpolation over a number of successive samples in the signal block. Thus, the masking system 43 does not require a separate interpolator in which the mean value of the preceding and the successive sample is to be determined to replace the erroneous sample.

Let us assume that an error flag is generated which denotes that a scale factor SFₘ of a signal block-in the sub-band signal SBₘ is erroneous. In this case the masking system 43 will allocate an information word to the scale factor concerned which word denotes the value of the scale factor for the signal block preceding the relevant signal block. In the case of the signal format as described with reference to Fig. 2 and also in the document (2), this implies that the corresponding scale factor information is taken from the preceding frame j-1.

Another option would be to replace the erroneous scale factor with a value obtained from extrapolation of, for example, the weighted average of two or more scale factors belonging to preceding signal blocks in the sub-band signal.

Let us assume that an error is found in the allocation information of frame j. If no error flag is generated for the allocation information for the preceding frame j-1, the masking system 43 will reiterate the previous frame j-1. If it appears that for the frame j-1 an error had already been detected in the allocation information, a zero amplitude information word will be allocated to all the samples in the frame j. As a result of the filtering function of the filter means 36 this means that another interpolation is performed automatically so that the output signal will not abruptly zero if an error is detected in the allocation information for a number of successive frames.

Let us assume that an error is detected in the sync signal in the first frame portion FD1 of the frame j. If no error is detected in the sync signal of the frame j-1, the masking system 43 will not react. However, if also the sync signal in the frame j-1 appears to be erroneous, the synchronization is assumed to be lost. In that case, as in the preceding case, an information word corresponding to the zero amplitude will be allocated to all the samples in the frame j.

In the foregoing the error masking was performed of the information which had not yet been decoded, such as the information included in the second digital signal. Another option is to perform error masking of the decoded information as it is derived from the second digital signal by the means 35. This implies that the error flags are to be applied to a control signal input 46 of the means 35 through the output 41. The error masking system 43 as represented in Fig. 3 will then be absent, but still be incorporated in means 35 which in that case will be referenced 35'. A further explanation of this means 35' will be given with reference to Fig. 4.

Fig. 4 shows that the input 34 of means 35' is coupled to the input of a multiplexer 50. In response to control signals (not shown) produced by a central processing unit 51, from the serial data stream of the second digital signal the allocation information is derived from the second frame portion FD2 of the frames. In one frame there is allocation information associated to one signal block of all the signal portions in all the sub-bands, *cf.* document (2). The allocation information is converted to a series of numbers n₁ to n_{M} in the dequantizer 52, which numbers denote the number of bits with which the samples in a signal block in the various sub-bands have been quantized. These numbers are stored in a memory 53. The allocation information stored in the memory 53 is necessary for deriving the scale factors and the samples of the serial data stream from the second digital signal. This is diagrammatically shown by means of line 54 over which this information is transported to the multiplexer 50. The multiplexer 50 is now capable of deriving the scale factor information from the third frame portion FD3 and after dequantization in the dequantizer 55, the scale factors SF₁ to SF_{M} can be stored in a memory 56. In addition, the multiplexer 50 can derive the samples of the third frame portion FD3 from the second digital signal and apply them to a quantizer 58 which derives the bits of the serial data stream that belong together also under the influence of the allocation information. After conversion to the normalized samples S_{m,1}, S_{m,q}, of a signal block in the sub-band SBₘ, these normalized samples are applied to a memory 59 and stored there. Fig. 4 diagrammatically shows the contents of the memory 59 in the case where a single frame has been decoded in the manner described above. The memory will then exactly contain a single signal block of all the sub-band signal portions (both the left and the right signal portions) in all the sub-bands. The normalized samples are then applied to a multiplier 60 which multiplies the normalized samples by their associated scale factors. The real samples S_{m,1} to S_{m,q} of a signal block in a sub-band SBₘ are then stored in a memory 61. *Via* the outputs 37.1 to 37.N the sub-band signals are then applied to the synthesis filter means.

If a single frame is decoded in the manner described above, the scale factor information from memory 56 will be stored in a memory 62. Subsequently, the next frame will be decoded. This means that the scale factor information of the next frame is stored in the memory 56, the bit allocation information in the memory 53 and the samples in the memories 59 and 61.

The error masking means is devised in the means 35' by a section of the central processing unit 51, the memory 62 and the memory 61. The control signal input 46 through which the error flags enter is coupled to the central processing unit 51. The central processing unit 51 is also supplied with timing information through an input 63, and clock signals through an input 64. The timing signals and the clock signals are generated internally, the timing signals being derived from the second digital signal by means of a sync unit (not shown). In tandem with the timing signals and the clock signals the central processing unit is capable of ascertaining in which information component an error occurs when there is an error flag.

Let us assume that an error flag is generated denoting that one of the samples in the memory 59 is erroneous. The central processing unit 51 will then generate on the lines 65 and 66 an address n,m, denoting the location in the memory 61 at which the erroneous sample would be stored after processing in multiplexer 60. The sub-band is m and n is the erroneous (n^{th}) sample in the signal block in the sub-band m. The central processing unit 51 further applies a write signal over line 67 to the memory 61, so that a "zero" applied to an input 68 of the memory 61 is written at the memory location n,m.

Let us assume that an error flag denoting that a scale factor SFₘ is erroneous is applied to input 46. In this case the central processing unit 51 generates an address m on line 69 and a control signal on line 70. The two signals are applied to the memories 56 and 62. In response to these signals the memory 62 will apply the scale factor SFₘ, stored in the memory and corresponding to the scale factor SFₘ of the previous frame, over the line 71 to an input of the memory 56. In response to the signals on the lines 69 and 70 this memory 56 will then store this value for the scale factor at the memory location for the scale factor SFₘ in its memory. This implies that the normalized samples s_{m,1}, to s_{mq}, in the multiplier 60 are multiplied by the scale factor SFₘ from the previous frame to replace the samples s_{m,1}, to s_{m,q}.

If an error flag denoting that there is an error in the allocation information in a frame is generated, the multiplexer 50 will no be longer capable of correctly deriving the scale factors and the samples from the frame. If the allocation information of the preceding frame is correct, the central processing unit will operate as follows. The decoding of the frame will be stopped and the content of the memory 61 will be read out once more to the outputs 37.1 to 37.M. Subsequently, the next frame will be decoded. However, if in the preceding frame the allocation information appeared not to be correct, the central processing unit 51 will generate a write signal on line 67 and also all the addresses from 1.1 to M.q of the memory locations in the memory 61. This means that the "zero" amplitude is stored at all the memory locations. All the signal blocks in all the sub-bands thus contain samples having "zero" amplitude, both for the left and for the right signal portions.

If an error is detected in the sync signal of the frame j, whereas no error is detected in the sync signal of the frame j-1, the central processing unit will not give any reaction to this and will decode the information of the frame in the manner described above. If also the sync signal of the frame j+1 proves to be erroneous, the memory 61 will be filled with zero amplitude samples in the manner described above.

It should further be observed that the invention is largely described with respect to monosignal coding and transmission. However, the invention is not restricted to this application. The invention may likewise be applied to stereo signal coding, in which each sub-band has two signal portions, *i.e.* a left and a right portion. The invention may also be applied to coding arrangements in which one or more of the sub-band signals may be coded in a stereo intensity mode. For an explanation of the intensity mode coding, reference be made to the documents (2) and (6) of the citation index.

### REFERENCES :

- (1): European Patent Application no. 289.080 (PHN 12.108).
- (2): European Patent Application no. 402973 (PHN 13.241).
- (3): EBU Techn. Review No. 230, August 1988.
G. Theile et al. "Low bit rate coding of high-quality audio signals"
An introduction to the MASCAM system".
- (4): Philips Journal of Research 44, 329-343, 1989.
R.N.J. Veldhuis et al. "Subband coding of digital audio signals".
- (5): IEEE ICASSP 80, Vol. 1, 327-331, April 9-11-1980
M.A. Krasner "The critical band coder Digital encoding of speech signals based on perceptual requirements of the auditory system".
- (6): Dutch Patent Application no. 91.00.173 (PHN 13.581).
- (7): European Patent Application no. 400.755 (PHQ 89.018A).
- (8): Dutch Patent Application no. 90.00.635 (PHN 13.281).
- (9a): Dutch Patent Application no. 90.01.127 (PHN 13.328).
- (9b): Dutch Patent Application no. 90.01.128 (PHN 13.329).
- (10): European Patent Application no. 150.081 (PHN 11.117).

## Claims

1. Digital transmission system comprising a transmitter and a receiver, for transmitting through a transmission medium, and receiving, a wide-band digital signal, for example a digital audio signal, sampled with a specific sample frequency Fₛ, wherein the transmitter comprises an input terminal (1) for receiving the wide-band digital signal, this input terminal being coupled to an input of a first coding means (2) which comprises signal splitting means (LP, BP, HP) for generating a plurality of M sub-band signals in response to the wide-band digital signal with sample frequency reduction, for which purpose the splitting means split up the wide-band digital signal into successive sub-bands having band numbers m which augment with frequency, where for m the following holds: 1 ≤ m ≤ M, which coding means further includes quantization means (Q₁, ..., Q_{M}) for quantizing samples included in blocks of the respective sub-band signals, a quantized sub-band signal being formed by consecutive signal blocks, each signal block contains q samples, and bit allocation means (6, 7) for generating bit allocation information denoting by how many bits the q samples in a signal block are represented, which transmitter further includes scale factor information determining means (10) for determining information relating to a scale factor which belongs to each signal block in the sub-band signal, means (14) for accommodating the quantized sub-band signals, the scale factor information and the bit allocation information in a frame of a second digital signal formed by successive frames, second coding means (15) for converting the second digital signal into a third digital signal so that an error correction of the third digital signal in the receiver is possible, and means (16) for applying the third digital signal to the transmission medium, the receiver comprising:
a receiving means (30) for receiving the third digital signal from the transmission medium,
an error correction means for converting the third digital signal into the second digital signal,
a deriving means (35) for deriving the quantized sub-band signals, the bit allocation information and the scale factor information from the frames in the second digital signal,
a control signal generating means (32) for generating a first control signal if an error in the third digital signal cannot be corrected when the conversion from the third digital signal to the second digital signal is made in the error correcting means,
an error masking means (51) for processing at least the sub-band signals in response to the first control signal, and
a synthesis filter means (36) for constructing a replica of the wide-band digital signal in response to the respective quantized sub-band signals, which synthesis filter means combines the sub-bands to the signal band of the wide-band digital signal with a sample frequency increase, characterized in that the error masking means is arranged for allocating the zero amplitude to a sample for which a first control signal is generated by the control signal generating means.

2. Receiver for receiving a third digital signal comprising subband samples and regenerating therefrom a wideband digital signal, the receiver comprising
- receiving means (30) for receiving the third digital signal from a transmission medium,
- error correction means for converting the third digital signal into the second digital signal,
- deriving means (35) for deriving quantized subband signals from frames in the second digital signal,
- control signal generating means (32) for generating a first control signal if an error in the third digital signal cannot be corrected when the conversion from the third digital signal to the second digital signal is made in the error correction means,
- error masking means for processing at least the subband signals in response to the first control signal, and
- synthesis filter means (36) for constructing a replica of the wide-band digital signal in response to the respective quantized sub-band signals, which synthesis filter means combines the sub-bands to the signal band of the wide-band digital signal with a sample frequency increase, characterized in that the error masking means (51,65,66,67) is arranged for allocating a zero amplitude to a sample for which a first control signal is generated by the control signal generating means.

3. Receiver as claimed in Claim 2, wherein the control signal generating means (32) is arranged for generating a second control signal if a scale factor for a signal block of a sub-band signal is erroneous, characterized in that the error masking means (51) is arranged for replacing the erroneous scale factor with an extrapolated value from scale factors belonging to one or more preceding signal blocks in the sub-band signal when the second control signal occurs.

4. Receiver as defined in Claim 3, characterized in that the error masking means (51) is arranged for making this scale factor equal to the scale factor for the signal block preceding the signal block in the sub-band signal when the second control signal occurs.

5. Receiver as defined in Claim 2, 3 or 4, wherein the control signal generating means (32) is arranged for generating a third control signal if there is an error in bit allocation information contained in a frame, characterized in that the error masking means (51) is arranged for reiterating the information stored in the preceding frame if the control signal generating means has generated the third control signal for a frame and has not generated a third error signal for the frame preceding that frame .

6. Receiver as claimed in Claim 5, characterized in that the error masking means (51) is arranged for assigning the zero amplitude to all the samples in the signal blocks in a frame if the control signal generating means has also generated a third control signal for a directly successive frame.

7. Receiver as defined in one of the Claims 2 to 6, wherein the deriving means (35) is further arranged for deriving a sync signal present in each one of the frames in the second digital signal, and the control signal generating means is further arranged for generating a fourth control signal if a sync signal is erroneous, characterized in that the error masking means (51) is arranged for assigning the zero amplitude to all the samples in the signal blocks in the second frame if the control signal generating means has generated a fourth control signal for a first and a directly successive second frame.

8. Receiver as defined in one of the preceding Claims, characterized in that the receiver has the form of an arrangement (30, 32, 35, 36) for reading the third digital signal from a track on a record carrier.

9. Receiver as defined in Claim 8, characterized in that the record carrier is a magnetic record carrier.

## Patentansprüche

1. Digitales Übertragungssystem mit einem Sender und einem Empfänger, um ein digitales Breitbandsignal, wie zum Beispiel ein, mittels einer spezifischen Abtastfrequenz F_{S} abgetastetes, digitales Tonsignal, über ein Übertragungsmedium zu senden und zu empfangen, bei welchem der Sender einen Eingangsanschluß (1) zum Empfang des digitalen Breitbandsignals aufweist, wobei dieser Eingangsanschluß an einen Eingang eines ersten Codiermittels (2) angekoppelt ist, welches Signalspaltungsmittel (LP,BP,HP) zur Erzeugung mehrerer M-Unterbandsignale in Reaktion auf das digitale Breitbandsignal mit verringerter Abtastfrequenz vorsieht, wofür die Signalspaltungsmittel das digitale Breitbandsignal in sukzessive Unterbänder mit, mit der Frequenz ansteigenden Bandnummern m aufspalten, wobei für m das folgende gilt: 1 ≤ m ≤ M, wobei das Codiermittel ferner Quantisierungsmittel (Q₁ ... Q_{M}) aufweist, um in Blöcken der jeweiligen Unterbandsignale enthaltene Abtastwerte zu quantisieren, wobei ein quantisiertes Unterbandsignal durch konsekutive Signalblöcke gebildet wird, jeder Signalblock q-Abtastwerte enthält, sowie Bit-Zuordnungsmittel (6,7), um Bit-Zuordnungsinformationen zu erzeugen, welche zeigen, durch wie viele Bits die q-Abtastwerte in einem Signalblock dargestellt sind, wobei der Sender weiterhin Mittel (10) zur Ermittlung von Skalenfaktorinformationen vorsieht, um Informationen zu ermitteln, welche sich auf einen, zu jedem Signalblock in dem Unterbandsignal gehörenden Skalenfaktor beziehen, Mittel (14) zur Aufnahme der quantisierten Unterbandsignale, der Skalenfaktorinformationen und der Bit-Zuordnungsinformationen in einem Datenblock eines, durch sukzessive Datenblöcke gebildeten, zweiten Digitalsignals, zweite Codiermittel (15) zur Umwandlung des zweiten Digitalsignals in ein drittes Digitalsignal vorsieht, so daß eine Fehlerkorrektur des dritten Digitalsignals in dem Empfänger möglich ist, sowie Mittel (16) aufweist, um das dritte Digitalsignal an das Übertragungsmedium anzulegen, wobei der Empfänger aufweist:
ein Empfangsmittel (30) zum Empfang des dritten Digitalsignals von dem Übertragungsmedium,
ein Fehlerkorrekturmittel zur Umwandlung des dritten Digitalsignals in das zweite Digitalsignal,
ein Ableitungsmittel (35) zur Ableitung der quantisierten Unterbandsignale, der Bit-Zuordnungsinformationen und der Skalenfaktorinformationen von den Datenblöcken in dem zweiten Digitalsignal,
ein Regelsignalerzeugungsmittel (32) zur Erzeugung eines ersten Regelsignals, falls ein Fehler in dem dritten Digitalsignal nicht korrigiert werden kann, wenn die Umwandlung von dem dritten Digitalsignal in das zweite Digitalsignal in dem Fehlerkorrekturmittel stattfindet,
ein Fehlermaskierungsmittel (51), um zumindest die Unterbandsignale in Reaktion auf das erste Regelsignal zu verarbeiten, sowie
ein Synthesefiltermittel (36) zur Herstellung einer Kopie des digitalen Breitbandsignals in Reaktion auf die jeweiligen quantisierten Unterbandsignale, welche die Unterbänder mit dem Signalband des digitalen Breitbandsignals mit erhöhter Abtastfrequenz verbindet, dadurch gekennzeichnet, daß das Fehlermaskierungsmittel vorgesehen ist, um die Nullamplitude einem Abtastwert zuzuordnen, für welchen ein erstes Regelsignal durch die Regelsignalerzeugungsmittel erzeugt wird.

2. Empfänger zum Empfang eines dritten Digitalsignals, welches Unterbandabtastwerte aufweist und aus diesen ein digitales Breitbandsignal wiedergewinnt, wobei der Empfänger aufweist:
Empfangsmittel (30) zum Empfang des dritten Digitalsignals von einem Übertragungsmedium,
Fehlerkorrekturmittel zur Umwandlung des dritten Digitalsignals in das zweite Digitalsignal,
Ableitungsmittel (35) zur Ableitung von quantisierten Unterbandsignalen von Datenblöcken in dem zweiten Digitalsignal,
Regelsignalerzeugungsmittel (32) zur Erzeugung eines ersten Regelsignals, falls ein Fehler in dem dritten Digitalsignal nicht korrigiert werden kann, wenn die Umwandlung von dem dritten Digitalsignal in das zweite Digitalsignal in den Fehlerkorrekturmitteln stattfindet,
Fehlermaskierungsmittel, um zumindest die Unterbandsignale in Reaktion auf das erste Regelsignal zu verarbeiten, sowie
Synthesefiltermittel (36) zur Herstellung einer Kopie des digitalen Breitbandsignals in Reaktion auf die jeweiligen quantisierten Unterbandsignale, welche die Unterbänder mit dem Signalband des digitalen Breitbandsignals mit erhöhter Abtastfrequenz verbindet, dadurch gekennzeichnet, daß das Fehlermaskierungsmittel (51,65,66,67) vorgesehen ist, um eine Nullamplitude einem Abtastwert zuzuordnen, für welchen ein erstes Regelsignal durch die Regelsignalerzeugungsmittel erzeugt wird.

3. Empfänger nach Anspruch 2, bei welchem das Regelsignalerzeugungsmittel (32) vorgesehen ist, um ein zweites Regelsignal zu erzeugen, wenn ein Skalenfaktor für einen Signalblock eines Unterbandsignals fehlerhaft ist, dadurch gekennzeichnet, daß das Fehlermaskierungsmittel (51) vorgesehen ist, um den fehlerhaften Skalenfaktor bei Auslösung des zweiten Regelsignals durch einen extrapolierten Wert aus Skalenfaktoren zu ersetzen, welche zu einem oder mehreren vorhergehenden Signalblöcken in dem Unterbandsignal gehören.

4. Empfänger nach Anspruch 3, dadurch gekennzeichnet, daß das Fehlermaskierungsmittel (51) vorgesehen ist, um diesen Skalenfaktor dem Skalenfaktor für den Signalblock gleichzusetzen, welcher dem Signalblock in dem Unterbandsignal vorausgeht, wenn das zweite Regelsignal ausgelöst wird.

5. Empfänger nach Anspruch 2, 3 oder 4, bei welchem das Regelsignalerzeugungsmittel (32) vorgesehen ist, um ein drittes Regelsignal zu erzeugen, wenn ein Fehler in den, in einem Datenblock enthaltenen Bitzuordnungsinformationen auftritt, dadurch gekennzeichnet, daß das Fehlermaskierungsmittel (51) vorgesehen ist, um die in dem vorhergehenden Datenblock gespeicherten Informationen zu wiederholen, wenn das Regelsignalerzeugungsmittel das dritte Regelsignal für einen Datenblock und kein drittes Fehlersignal für den diesem Datenblock vorausgehenden Datenblock erzeugt hat.

6. Empfänger nach Anspruch 5, dadurch gekennzeichnet, daß das Fehlermaskierungsmittel (51) vorgesehen ist, um die Nullamplitude sämtlichen Abtastwerten in den Signalblöcken in einem Datenblock zuzuordnen, wenn das Regelsignalerzeugungsmittel ebenfalls ein drittes Regelsignal für einen unmittelbar nachfolgenden Datenblock erzeugt hat.

7. Empfänger nach einem der Ansprüche 2 bis 6, bei welchem das Ableitungsmittel (35) weiterhin vorgesehen ist, um ein in jedem der Datenblöcke in dem zweiten Digitalsignal vorhandenes Sync-Signal abzuleiten, und bei welchem das Regelsignalerzeugungsmittel weiterhin vorgesehen ist, um ein viertes Regelsignal zu erzeugen, wenn ein Sync-Signal fehlerhaft ist, dadurch gekennzeichnet, daß das Fehlermaskierungsmittel (51) angeordnet ist, um die Nullamplitude sämtlichen Abtastwerten in den Signalblöcken in dem zweiten Datenblock zuzuordnen, wenn das Regelsignalerzeugungsmittel ein viertes Regelsignal für einen ersten und einen auf diesen unmittelbar folgenden zweiten Datenblock erzeugt hat.

8. Empfänger nach einem der vorangegangenen Ansprüche, dadurch gekennzeichnet, daß der Empfänger die Form einer Anordnung (30,32,35,36) zum Ablesen des dritten Digitalsignals von einer Spur auf einem Datenträger aufweist.

9. Empfänger nach Anspruch 8, dadurch gekennzeichnet, daß der Datenträger durch einen Magnetdatenträger dargestellt ist.

## Revendications

1. Système de transmission numérique comprenant un émetteur et un récepteur, en vue de transmettre, au moyen d'un milieu de transmission, et de recevoir un signal numérique à large bande, par exemple un signal audio numérique, échantillonné suivant une fréquence d'échantillonnage specifique Fₛ, dans lequel l'émetteur comprend une borne d'entrée (1) en vue de recevoir le signal numérique à large bande, cette borne d'entrée étant couplée à une entrée d'un premier moyen de codage (2) qui comprend des moyens de division de signaux (LP, BP, HP) pour générer une pluralité de M signaux de sous-bandes en réaction au signal numérique à large bande présentant une réduction de la fréquence d'échantillonage, et à cet effet les moyens de division divisent le signal numérique à large bande en des sous-bandes successives possédant des numéros de bande m qui augmentent avec la fréquence, où m a une valeur égale à : 1 ≤ m ≤ M, lequel moyen de codage comprend en outre un moyen de quantification (Q₁, ..., Q_{M}) en vue de quantifier des échantillons inclus dans des blocs des signaux de sous-bandes correspondants, un signal quantifié de sous-bande étant formé de blocs de signaux consécutifs, chaque bloc de signaux contenant q échantillons, et un moyen d'attribution de bits (6, 7) en vue de générer l'information d'attribution de bits indiquant par combien de bits les q échantillons sont représentés dans un bloc de signaux, lequel émetteur comprend en outre un moyen de détermination d'information de facteur d'échelle (10) en vue de déterminer les informations relatives à un facteur d'échelle appartenant à chaque bloc de signaux dans le signal de sous-bande, un moyen (14) pour insérer les signaux quantifiés de sous-bande, l'information de facteur d'échelle et l'information d'attribution de bits dans une trame d'un deuxième signal numérique formé de trames successives, un deuxième moyen de codage (15) pour convertir le deuxième signal numérique en un troisième signal numérique de manière à rendre possible une correction d'erreur du troisième signal numérique dans le récepteur, et un moyen (16) en vue d'appliquer le troisième signal numérique au milieu de transmission, le récepteur comprenant :
un moyen de réception (30) en vue de recevoir le troisième signal numérique en provenance du milieu de transmission;
un moyen de correction d'erreur en vue de convertir le troisième signal numérique en deuxième signal numérique;
un moyen de dérivation (35) en vue de dériver les signaux de sous-bandes quantifiés, l'information d'attribution de bits et l'information de facteur d'échelle à partir des trames dans le deuxième signal numérique;
un moyen de génération (32) de signaux de commande en vue de générer un premier signal de commande si une erreur dans le troisième signal numérique ne peut pas être corrigée alors qu'une conversion du troisième signal numérique en deuxième signal numérique est réalisée dans le moyen de correction d'erreur;
un moyen de masquage d'erreur (51) en vue de traiter au moins les signaux de sous-bandes en réponse au premier signal de commande, et
un moyen faisant office de filtre de synthèse (36) en vue de construire une réplique du signal numérique à large bande en réponse aux signaux de sous-bandes quantifiés respectifs, lequel moyen faisant office de filtre de synthèse combine les sous-bandes en la bande de signal du signal numérique à large bande présentant une augmentation de la fréquence d'échantillonnage, caractérisé en ce que le moyen de masquage d'erreur est configuré en vue d'attribuer l'amplitude zéro à un échantillon pour lequel un premier signal de commande est généré par le moyen de génération de signaux de commande.

2. Récepteur pour recevoir un troisième signal numérique comprenant des échantillons de sous-bandes et pour regénérer à partir de ceux-ci un signal numérique à large bande, le récepteur comprenant :
- un moyen de réception (30) en vue de recevoir le troisième signal numérique venant du milieu de transmission;
- un moyen de correction d'erreur en vue de convertir le troisième signal numérique en deuxième signal numérique;
- un moyen de dérivation (35) en vue de dériver des signaux de sous-bandes quantifiés à partir de trames dans le deuxième signal numérique;
- un moyen de génération (32) de signaux de commande en vue de générer un premier signal de commande si une erreur dans le troisième signal numérique ne peut pas être corrigée lorsque la conversion du troisième signal numérique en deuxième signal numérique est faite dans le moyen de correction d'erreur;
- un moyen de masquage d'erreur en vue de traiter au moins les signaux de sous-bandes en réponse au premier signal de commande, et
- un moyen faisant office de filtre de synthèse (36) en vue de construire une réplique du signal numérique à large bande en réponse aux signaux de sous-bandes respectifs quantifiés, lequel moyen faisant office de filtre de synthèse combine les sous-bandes en la bande de signal du signal numérique à large bande présentant une augmentation de la fréquence d'échantillonnage, caractérisé en ce que le moyen de masquage d'erreur (51, 65, 66, 67) est configuré en vue d'attribuer une amplitude zéro à un échantillon pour lequel un premier signal de commande est généré par le moyen de génération de signaux de commande.

3. Récepteur suivant la revendication 2, dans lequel le moyen de génération de signaux de commande (32) est configuré en vue de générer un deuxième signal de commande si un facteur d'échelle pour un bloc de signaux d'un signal de sous-bande est erroné, caractérisé en ce que le moyen de masquage d'erreur (51) est configuré en vue de remplacer le facteur d'échelle erroné par une valeur extrapolée à partir des facteurs d'échelle appartenant à un ou plusieurs des blocs de signaux précédents dans le signal de sous-bande lorsque le deuxième signal de commande se produit.

4. Récepteur suivant la revendication 3, caractérisé en ce que le moyen de masquage d'erreur (51) est configuré en vue de rendre ce facteur d'échelle égal au facteur d'échelle du bloc de signaux précédant le bloc de signaux dans le signal de sousbande lorsque le deuxième signal de commande se produit.

5. Récepteur suivant la revendication 2, 3 ou 4, dans lequel le moyen de génération de signaux de commande (32) est configuré en vue de générer un troisième signal de commande s'il y a une erreur dans l'information d'attribution de bits contenue dans une trame, caractérisé en ce que le moyen de masquage d'erreur (51) est configuré en vue de réitérer l'information stockée dans la trame précédente si le moyen de génération de signaux de commande a généré un troisième signal de commande pour une trame et n'a pas généré un troisième signal d'erreur pour la trame précédant cette trame.

6. Récepteur suivant la revendication 5, caractérisé en ce que le moyen de masquage d'erreur (51) est configuré en vue d'assigner l'amplitude zéro à tous les échantillons dans les blocs de signaux d'une trame si le moyen de génération de signaux de commande a également généré un troisième signal de commande pour une trame la suivant directement.

7. Récepteur suivant l'une quelconque des revendications 2 à 6, dans lequel le moyen de dérivation (35) est également configuré en vue de dériver un signal sync présent dans chacune des trames du deuxième signal numérique, et le moyen de génération de signaux de commande est également configuré en vue de générer un quatrième signal de commande si un signal sync est erroné, caractérisé en ce que le moyen de masquage d'erreur (51) est configuré en vue d'assigner l'amplitude zéro à tous les échantillons dans les blocs de signaux dans la deuxième trame si le moyen de génération de signaux de commande a généré un quatrième signal de commande pour une première trame et pour une deuxième trame la suivant directement.

8. Récepteur suivant l'une quelconque des revendications précédentes, caractérisé en ce que le récepteur a la forme d'un montage (30, 32, 35, 36) en vue de lire le troisième signal numérique à partir d'une piste d'un support d'enregistrement.

9. Récepteur suivant la revendication 8, caractérisé en ce que le support d'enregistrement est un support d'enregistrement magnétique.
